# EUROPÄISCHE PATENTSCHRIFT

(11) **EP 3 775 398 B1**
(45) Veröffentlichungstag und Bekanntmachung des Hinweises auf die Patenterteilung: **02.07.2025**
(21) Anmeldenummer: 19720381.3
(22) Anmeldetag: 05.04.2019
(51) Int. Cl.: E02F 3/64, B60P 1/00, E02F 3/96, B62D 63/06

(54) **TRANSPORTKARRE FÜR EINEN BAGGER UND BAGGERSYSTEM**
TRANSPORT TROLLEY FOR AN EXCAVATOR, AND EXCAVATOR SYSTEM
CHARIOT DE TRANSPORT POUR EXCAVATEUR ET SYSTÈME D'EXCAVATEUR

(30) Priorität: 06.04.2018 DE 102018108196
(43) Veröffentlichungstag der Anmeldung: 17.02.2021
(73) Patentinhaber: Jansen, Thomas, 67549 Worms (DE)
(72) Erfinder: Jansen, Thomas, 67549 Worms (DE)
(74) Vertreter: Habermann Intellectual Property Partnerschaft von Patentanwälten mbB
(86) Internationale Anmeldenummer: PCT/EP2019/058658
(87) Internationale Veröffentlichungsnummer: WO 2019/193163

(56) Entgegenhaltungen:
- WO-A1-2013/138907
- WO-A1-94/11584
- US-A- 3 478 902
- US-A- 4 253 536
- US-A- 4 723 887

## Beschreibung

Die Erfindung betrifft eine Transportkarre zur Verwendung mit einem Bagger, wobei durch die Transportkarre zumindest ein Transport einer Ladung, beispielsweise eines Schütt- oder Stückgutes erleichtert ist.

Um das Arbeiten mit Baggern und Ladern, insbesondere Rad- oder Kompaktladern zu vereinfachen, sind eine Vielzahl an Anbau- und Zusatzgeräten für diese Maschinen bekannt. Für Bagger sind unter anderem Anbaugeräte bekannt, die an einer Geräteaufnahme eines Auslegers eines Baggers festlegbar sind, beispielsweise unterschiedliche Löffel, Bohrgeräte, Greifgeräte und Ähnliche. Darüber hinaus sind auch Anbaugeräte für Bagger bekannt, die an einer fahrwerksseitigen Geräteaufnahme des Baggers anordenbar sind, wobei an der fahrwerksseitigen Geräteaufnahme des Baggers üblicherweise ein Räumschild angeordnet und festgelegt ist. Aufgrund konstruktiver Besonderheiten, sind Anbau- und Zusatzgeräte, die mit Baggern verwendbar sind, üblicherweise nicht mit Ladern verwendbar.

Bei Erdbauarbeiten, auf Baustellen, im Gartenbau oder bei ähnlichen Arbeiten ist es häufig erforderlich, dass verhältnismäßig große Mengen an Material bewegt werden müssen. Bei Erdbauarbeiten ist das beispielsweise Aushub, bei garten- und landschaftsbaulichen Arbeiten ist dies häufig Grünschnitt. Mit den aus dem Stand der Technik bekannten Anbau- und Zusatzgeräten für Bagger ist es nicht möglich, dass ausschließlich mit dem Bagger das zu transportierende Material sinnvoll bewegt werden kann. Zwar sind Rollcontainer bekannt, die an der fahrwerksseitigen Geräteaufnahme des Baggers anordenbar sind und die es ermöglichen, dass durch den Bagger Material bewegt werden kann, diese sind jedoch unflexibel und schränken die Beweglichkeit des Baggers sehr stark ein. Darüber hinaus erfordert ein An- und Abkuppeln dieser Geräte eine exakte Ausrichtung zwischen Baggerfahrwerk und Rollcontainer sowie einen ausreichend großen Rangierraum für den Bagger, sodass derartige Rollcontainer in Bereichen mit beschränktem Rangierraum nicht oder nur sehr eingeschränkt einsetzbar sind. Eine Transportkarre nach dem Oberbegriff von Anspruch 1 ist aus Dokument WO 2013/138907 A1 bekannt.

Als Aufgabe der vorliegenden Erfindung wird es daher angesehen, eine Transportkarre zur Verfügung zu stellen, die von dem Bagger unabhängig von einer Ausrichtung des Baggerfahrwerks zu der Transportkarre bewegt werden kann.

Diese Aufgabe wird erfindungsgemäß dadurch gelöst, dass die Transportkarre einen Funktionsabschnitt, einen Fahrwerksabschnitt und einen Kupplungsabschnitt aufweist, wobei in dem Funktionsabschnitt das Funktionsmodul an der Transportkarre festgelegt ist, wobei in dem Fahrwerksabschnitt zumindest ein Fahrwerkselement angeordnet ist, wobei die Transportkarre bei bestimmungsgemäßer Verwendung auf dem zumindest einen Fahrwerkselement aufsteht und durch das Fahrwerkselement eine Bewegung der Transportkarre auf einem Untergrund erleichtert ist, wobei eine Kippachse der Transportkarre durch das Fahrwerkselement verläuft, wobei in dem Kupplungsabschnitt zumindest ein Kupplungsmittel angeordnet ist, wobei mittels des Kupplungsmittels die Transportkarre an einer Geräteaufnahme eines Auslegers des Baggers festlegbar und eine Manipulationskraft des Baggers in einem Kraftangriffspunkt des Kupplungsmittels in die Transportkarre einleitbar ist. Durch eine derartige Ausgestaltung der erfindungsgemäßen Transportkarre ist es ermöglicht, dass ein Bagger, insbesondere ein sogenannter Minibagger, die Transportkarre in einer Art und Weise einsetzen kann, die einer Verwendung einer Schubkarre durch eine Person ähnelt. Es ist erfindungsgemäß vorgesehen, dass die Transportkarre derart ausgestaltet ist, dass sie durch den Bagger mittels des Auslegers des Baggers sowohl geschoben, als auch gezogen werden kann. Es ist darüber hinaus auch möglich und erfindungsgemäß vorgesehen, dass die Transportkarre derart an den Bagger angepasst sein kann, dass sie zumindest in einem unbeladenen Zustand durch den Bagger an einen Einsatzort gehoben werden kann.

Eine vorteilhafte Umsetzung des Erfindungsgedankens sieht vor, dass in einem Gesamtschwerpunkt der Transportkarre eine Gesamtgewichtskraft der Transportkarre angreift, wobei ein Produkt aus einem Betrag der Gesamtgewichtskraft und einem horizontaler Gesamtschwerpunktabstand von der Kippachse kleiner oder gleich einem Produkt aus einem Betrag der Manipulationskraft und einem horizontalen Kraftangriffspunktabstand von der Kippachse ist, sodass durch die Transportkarre ein Hebel gebildet ist, so dass durch den Bagger eine Ladung manipulierbar ist, die eine Gewichtskraft ausübt, die größer ist, als die durch den Bagger maximal ausübbare Manipulationskraft. Es ist möglich und erfindungsgemäß vorgesehen, dass durch die Transportkarre sowohl ein einseitiger, als auch ein zweiseitiger Hebel gebildet sein kann.

Eine vorteilhafte Ausgestaltung der Erfindung sieht vor, dass das Kupplungsmittel derart ausgestaltet ist, dass es mit einem Schnellwechselsystem für Baggeranbaugeräte verwendbar ist. Es ist auch möglich und erfindungsgemäß vorgesehen, dass das Kupplungsmittel unter anderem auch eine hydraulische und oder elektrische und oder pneumatische Kupplung aufweisen kann.

Bei einer vorteilhaften Ausgestaltung der erfindungsgemäßen Transportkarre ist vorgesehen, dass das Fahrwerkselement zumindest ein Rad aufweist, wobei die Transportkarre mit dem Rad auf dem Untergrund aufsteht. Es ist erfindungsgemäß vorgesehen, dass das Fahrwerkselement unter anderem auch Federungs- und Dämpfungselemente aufweisen kann. Darüber hinaus ist es auch möglich, Fahrwerkselemente ohne Federungs- und oder Dämpfungselemente zu verwenden, wobei eine Dämpfung beispielsweise durch eine Eigendämpfung der Räder erfolgen kann. Es ist erfindungsgemäß vorgesehen, dass die Kippachse durch die Drehachse des Rads verläuft, vorteilhafterweise durch die Nabe des Rads. Vorteilhafterweise ist erfindungsgemäß vorgesehen, dass in dem Fahrwerksabschnitt beabstandet zu dem Fahrwerkselement mindestens ein Stützfuß oder eine Stützkufe angeordnet ist, um ein Kippen der Transportkarre zu vermeiden.

Es ist auch möglich und erfindungsgemäß vorgesehen, dass das Rad mit einer Vorrichtung zum Eigenantrieb der Transportkarre in Wirkverbindung gebracht sein kann, beispielsweise mit einem Hydraulikmotor, einem Elektromotor oder ähnlichem. Der Hydraulikmotor kann beispielsweise mittels der Hydraulik des Baggers antreibbar sein. Darüber hinaus ist es ebenfalls möglich und erfindungsgemäß vorgesehen, dass Räder lenkbar ausgestaltet sein können.

Eine vorteilhafte Umsetzung des Erfindungsgedankens sieht vor, dass der Funktionsabschnitt der Transportkarre ein erstes Verbindungsmittel aufweist, wobei das Funktionsmodul ein zweites Verbindungsmittel aufweist, wobei das erste Verbindungsmittel und das zweite Verbindungsmittel derart aneinander angepasst sind, dass mittels der Verbindungsmittel das Funktionsmodul in dem Funktionsabschnitt an der Transportkarre festlegbar ist. Das Verbindungsmittel kann insbesondere eine mechanische Kupplung, eine magnetische Kupplung, eine Reibkupplung, ein Haken oder ähnliches aufweisen. Es ist darüber hinaus auch möglich, dass das Verbindungsmittel nach Art einer Containerkupplung, einem sogenannten Twistlock ausgestaltet sein kann.

Eine vorteilhafte Ausgestaltung der Erfindung sieht vor, dass in dem Funktionsabschnitt zumindest ein Führungsmittel angeordnet ist, wobei durch das Führungsmittel eine bestimmungsgemäße Ausrichtung des Funktionsmoduls in Relation zu dem Funktionsabschnitt der Transportkarre bei einem Festlegen des Funktionsmoduls an der Transportkarre unterstützt ist. Es ist erfindungsgemäß vorgesehen, dass das Führungsmittel beispielsweise eine Schiene, ein Führungsbolzen, eine Nut oder ähnliches sein kann.

Bei der erfindungsgemäßen Transportkarre ist vorgesehen, dass in dem

Funktionsabschnitt zumindest zwei Funktionsmodule anordenbar sind. Durch eine derartige Ausgestaltung der erfindungsgemäßen Transportkarre wird es ermöglicht, dass beispielsweise bei gartenbaulichen Arbeiten mehrere Funktionsmodule mit gleichen oder unterschiedlichen Eigenschaften an der Transportkarre festgelegt werden können. So ist es beispielsweise möglich, dass ein Funktionsmodul zur Aufnahme von Grünschnitt und/oder Aushube geeignet sein kann, wobei ein weiteres Funktionsmodul bereits vor Aufnahme der Arbeiten mit für die Arbeit benötigten Arbeitsutensilien beladen sein kann.

Eine vorteilhafte Umsetzung des Erfindungsgedankens sieht vor, dass das Funktionsmodul als ein Ladungsaufnahmeelement ausgebildet ist, wobei das Ladungsaufnahmeelement zumindest ein Ladungsaufnahmemittel aufweist, wobei in dem Ladungsaufnahmemittel eine Ladung anordenbar ist und/ oder durch das Ladungsaufnahmemittel eine Ladung aufgenommen werden kann. Ladungen, die anordenbar sind, sind insbesondere Stückgüter, wie beispielsweise Holzlatten, Blumenkübel, Randsteine oder ähnliches. Ladungen, die aufgenommen werden können, sind insbesondere Schüttgüter, wie etwa Kies oder Erde, sowie Flüssigkeiten.

Eine vorteilhafte Ausgestaltung der Erfindung sieht vor, dass das Ladungsaufnahmemittel zumindest abschnittsweise als eine Mulde ausgestaltet ist, wobei ein Muldeninnenraum derart von einer Muldenwand umschlossen ist, dass eine als ein Schüttgut und/ oder eine Flüssigkeit ausgebildete Ladung durch die Mulde aufnehmbar ist. Es ist dabei möglich und erfindungsgemäß vorgesehen, dass die Mulde einstückig aus einem Kunststoff oder einem Metall, beispielsweise mittels eines umformenden Fertigungsverfahrens gefertigt sein kann. Es ist darüber hinaus auch möglich, dass die Mulde mittels eines fügenden Fertigungsverfahrens aus mehreren einzelnen Teilen zusammengesetzt sein kann.

Bei einer vorteilhaften Ausgestaltung der erfindungsgemäßen Transportkarre ist vorgesehen, dass zumindest ein Ladungsaufnahmemittel eine Runge ist, wobei durch das als Runge ausgebildete Ladungsaufnahmemittel eine Gefahr eines Herausfallens eines als Stückgut ausgebildeten Ladungsstückes aus dem Ladungsaufnahmeelement verringert ist. Es ist auch möglich und erfindungsgemäß vorgesehen, dass die Runge lösbar in einer Rungenaufnahme festgelegt sein kann. Besonders vorteilhafterweise ist ebenfalls vorgesehen, dass in einer der Rungenaufnahmen auch ein Werkzeug mit einem Stiel, beispielsweise ein Besen, eine Schaufel, eine Spitzhacke oder ähnliches angeordnet sein kann, sodass durch das in der Rungenaufnahme angeordnete Werkzeug eine Runge gebildet ist.

Vorteilhafterweise ist erfindungsgemäß vorgesehen, dass mindestens ein Ladungsaufnahmemittel ein Tank ist. In dem Tank kann vorteilhafterweise Wasser, Kraftstoff oder dergleichen transportiert werden.

Eine vorteilhafte Umsetzung des Erfindungsgedankens sieht vor, dass das Funktionsmodul zumindest abschnittsweise als ein Sieb ausgebildet ist, sodass nur Ladung einer gewissen Ladungsmindestgröße im Ladeaufnahmeelement verbleibt. Es ist auch möglich und erfindungsgemäß vorgesehen, dass das als Sieb ausgebildete Funktionsmodul mehrere Siebebenen aufweisen kann, wobei mittels jeder Siebebene eine Ladung unterschiedlicher Körnung aussiebar ist, sodass beispielsweise eine Fraktionierung von Schüttgut ermöglicht ist.

Eine vorteilhafte Ausgestaltung der Erfindung sieht vor, dass das Funktionsmodul einen Betonkübelabschnitt aufweist, wobei eine Kübeloberfläche des Betonkübelabschnitts derart ausgestaltet ist, dass eine Verarbeitung von Beton in dem Betonkübelabschnitt begünstigt ist. Es ist vorgesehen, dass eine Begünstigung der Verarbeitung von Beton durch den Betonkübelabschnitt der erfindungsgemäßen Transportkarre auf mehrere Arten erfolgen kann. Es ist erfindungsgemäß zunächst vorgesehen, dass der Betonkübelabschnitt allseitig abgerundete Ecken aufweist, da durch diese ein Risiko minimiert ist, dass in dem Betonkübelabschnitt Bereiche ausgebildet sind, die durch ein zur Betonherstellung verwendetes Rührwerkzeug nicht überstrichen werden können. Bei einer besonders vorteilhaften Ausgestaltung des Betonkübelabschnitts der erfindungsgemäßen Transportkarre sind der Betonkübelabschnitt und ein verwendetes Rührwerkzeug derart aneinander angepasst, dass alle Bereiche des von dem Betonkübelabschnitt umgebenen Innenraums des Betonkübelabschnitts von dem Rührwerkzeug überstreichbar sind. Um eine Betonverarbeitung zu begünstigen ist es darüber hinaus auch vorgesehen, dass der Betonkübelabschnitt leicht zu reinigen und/oder unempfindlich gegenüber Reinigungsmitteln und/oder Reinigungsverfahren zur Entfernung von angetrocknetem Beton ist. Dies kann erfindungsgemäß auch dadurch erreicht werden, dass der Betonkübelabschnitt entweder aus einem chemisch beständigen sowie verformbaren Kunststoff gefertigt ist, der es ermöglicht, dass der angetrocknete Beton durch ein Verformen des Betonkübelabschnitts aus diesem gelöst werden kann, oder indem der Betonkübelabschnitt aus einem metallischen Werkstoff gefertigt ist, der auch unter Zuhilfenahme von beispielsweise Hammer und Meißel gereinigt werden kann.

Bei einer vorteilhaften Ausgestaltung der erfindungsgemäßen Transportkarre ist vorgesehen, dass der Betonkübelabschnitt aus dem Funktionsmodul entnehmbar ist, sodass ein angerührter Beton unabhängig von der Transportkarre an einen Verarbeitungsort verbringbar ist. Bei einer derartigen Ausgestaltung der erfindungsgemäßen Transportkarre ist vorgesehen, dass der Betonkübelabschnitt als ein eigenständiger Betonkübel verwendbar ist. Dies ist insbesondere vorteilhaft, wenn die Transportkarre in einem schwer zugänglichen und/oder stark durchschnittenen Arbeitsbereich, beispielsweise innerhalb eines Hauses, in einem kleinen Garten, in einem Wald oder an ähnlichen Orten verwendet werden soll.

Eine vorteilhafte Umsetzung des Erfindungsgedankens sieht vor, dass das Funktionsmodul eine Verbrennungseinrichtung aufweist, wobei die Verbrennungseinrichtung zumindest einen Brennraum und einen Aschekasten aufweist, wobei in dem Brennraum der Verbrennungseinrichtung pflanzliche Abfälle verbrennbar sind und wobei eine bei einem Verbrennen der pflanzlichen Abfälle anfallende Asche in dem Aschekasten gesammelt wird. Es ist darüber hinaus erfindungsgemäß vorgesehen, dass die Verbrennungseinrichtung in der Transportkarre zugewandten Bereichen einen Hitzeschutz aufweist, sodass ein Risiko einer Beschädigung der Transportkarre durch bei dem Verbrennen freigesetzter thermischer Energie verringert ist. Die bei dem Verbrennen anfallende Asche ist insbesondere auch geeignet, um vor Ort als Pflanzendünger verwendet zu werden.

Eine vorteilhafte Ausgestaltung der Erfindung sieht vor, dass die Verbrennungseinrichtung eine verschließbare Einfüllöffnung, zumindest eine Zuluftöffnung und zumindest eine Abluftöffnung aufweist, wobei durch die Einfüllöffnung ein Brennmaterial in den Brennraum einfüllbar ist, wobei durch die Zuluftöffnung Frischluft in den Brennraum einleitbar ist und wobei durch die Abluftöffnung Abgase aus dem Brennraum ausleitbar sind. Bei einer besonders vorteilhaften Ausgestaltung der Transportkarre sind die Zuluftöffnung und die Abluftöffnung derart aneinander angepasst, dass ein Kamineffekt innerhalb der Verbrennungseinrichtung befördert und so das Verbrennen der pflanzlichen Abfälle begünstigt wird. Es ist auch möglich und erfindungsgemäß vorgesehen, dass die Einfüllöffnung einen Schleusenmechanismus aufweisen kann, mittels dessen der Brennraum bei einem Einfüllen des Brennmaterials gegenüber einer Umgebungsluft abdichtbar ist, sodass bei dem Einfüllen des Brennmaterials eine Störung von Strömungsverhältnissen innerhalb des Brennraums minimiert und/oder ein Austreten von Verbrennungsgasen aus dem Brennraum durch die Einfüllöffnung verhindert ist.

Bei einer vorteilhaften Ausgestaltung der erfindungsgemäßen Transportkarre ist vorgesehen, dass die Einfüllöffnung mittels eines oberhalb des Brennraums angeordneten Deckels verschlossen ist, wobei die Abluftöffnung auf dem Deckel angeordnet ist. Bei einer derartigen Ausgestaltung der erfindungsgemäßen Transportkarre ist insbesondere vorteilhaft, dass auch sehr große Objekte zum Verbrennen in den Brennraum eingelegt werden können, beispielsweise Gestrüppe, Baumstümpfe, Äste oder ähnliches. Bei einer besonders vorteilhaften Ausgestaltung ist eine Projektion des Deckels auf einen Brennraumquerschnitt annähernd deckungsgleich mit dem Brennraumquerschnitt, sodass durch den Deckel hindurch der komplette Brennraum öffnenbar ist.

Eine vorteilhafte Umsetzung des Erfindungsgedankens sieht vor, dass an der Abluftöffnung ein Auspuffelement angeordnet ist. Es ist erfindungsgemäß vorgesehen, dass das Auspuffelement derart ausgestaltet sein kann, dass der Kamineffekt innerhalb der Verbrennungseinrichtung befördert ist. Darüber hinaus ist es ebenfalls vorgesehen, dass in dem Auspuffelement Filterelemente, Sensoren oder ähnliches angeordnet sein können, um so eine Zusammensetzung der bei der Verbrennung anfallenden Verbrennungsgase zu verändern und/oder zu überwachen. Bei einer besonders vorteilhaften Ausgestaltung der Verbrennungseinrichtung des Funktionselements der erfindungsgemäßen Transportkarre ist vorgesehen, dass das Filterelement einen katalytischen Konverter aufweist, mittels dessen Chemikalien aus dem Abgas entfernbar sind.

Eine vorteilhafte Ausgestaltung der Erfindung siegt vor, dass der Aschekasten zumindest ein Siebelement aufweist, wobei mittels des Siebelements bei der Verbrennung der pflanzlichen Abfällen anfallende feste Verbrennungsrückstände nach einer Partikelgröße fraktionierbar sind. Es ist darüber hinaus erfindungsgemäß vorgesehen, dass der Aschekasten auch Magneten aufweisen kann mittels derer ferromagnetische Anteile aus der Asche abscheidbar sind. Dies ist insbesondere vorteilhaft, wenn beispielsweise Bretter mit Nägeln und/oder Schrauben verbrannt werden. Es ist darüber hinaus auch möglich und erfindungsgemäß vorgesehen, dass der Aschekasten abdicht- und verschließbar ausgestaltet sein kann, um beispielsweise einer Kontamination mit giftigen Verbrennungsrückständen zu verhindern.

Bei einer vorteilhaften Ausgestaltung der erfindungsgemäßen Transportkarre ist vorgesehen, dass die Verbrennungseinrichtung zumindest eine erste Abbrandzone und eine zweite Abbrandzone aufweist, wobei in der ersten Abbrandzone eine erste Verbrennungstemperatur herrscht, wobei in der zweiten Abbrandzone eine zweite Verbrennungstemperatur herrscht und wobei die pflanzlichen Abfälle bei einem Verbrennen von der ersten Abbrandzone in die zweite Abbrandzone überführt werden, sodass mittels der Verbrennungseinrichtung eine Verbrennung von pflanzlichen Abfällen mit einer Restfeuchte von mehr als 25%, bevorzugt von mehr als 50% und besonders bevorzugt von mehr als 75% ermöglicht ist. Es ist erfindungsgemäß vorgesehen, dass zwischen den Abbrandzonen beispielsweise ein Rost oder eine Rostanordnung angeordnet sein kann, wobei die pflanzlichen Abfälle auf dem Rost oder der Rostanordnung der Schwerkraft folgend durch den Brennraum wandern und dabei getrocknet und/oder verbrannt werden.

Eine vorteilhafte Umsetzung des Erfindungsgedankens sieht vor, dass die Verbrennungseinrichtung eine Fremdfeuerung aufweist, wobei die Fremdfeuerung mittels eines Brennstoff befeuerbar ist und wobei durch die Fremdfeuerung die Verbrennung der pflanzlichen Abfälle eingeleitet und/ oder unterstützt und/ oder durchgeführt werden kann. Es ist erfindungsgemäß vorgesehen, dass die Verbrennungseinrichtung mittels der Fremdfeuerung angefeuert werden kann. Darüber hinaus ist es möglich, dass das Verbrennen der pflanzlichen Abfälle unterstützt werden kann, wenn diese eine sehr hohe Restfeuchte aufweisen und ein selbsterhaltendes Abbrennen der pflanzlichen Abfälle ansonsten nicht möglichst ist.

Die Erfindung betrifft auch ein Baggersystem aus einer erfindungsgemäßen Transportkarre und einem Bagger.

Bei einer vorteilhaften Ausgestaltung des erfindungsgemäßen Baggersystems ist vorgesehen, dass das Baggersystem eine erfindungsgemäße Transportkarre mit einem Betonkübelabschnitt sowie ein Rührwerk umfasst, wobei das Rührwerk einen Rührabschnitt, einen Antriebsabschnitt und einen Rührwerkkupplungsabschnitt aufweist, wobei das Rührwerk mittels des Rührwerkkupplungsabschnitts an einer Geräteaufnahme eines Auslegers des Baggers festlegbar ist, wobei der Antriebsabschnitt zumindest einen Rührmotor aufweist, wobei der Rührabschnitt derart mit dem Rührmotor in Wirkverbindung bringbar ist, dass der Rührabschnitt durch den Rührmotor in eine Rührbewegung versetzbar ist und wobei der Rührabschnitt derart an den Betonkübelabschnitt angepasst ist, dass in dem Betonkübelabschnitt der Transportkarre mittels des Rührwerks ein Beton anrührbar ist. Es ist möglich und erfindungsgemäß vorgesehen, dass eine in dem Baggersystem verwendete Transportkarre ausfahrbare Stützelemente aufweisen kann, mittels derer ein sicherer Stand der Transportkarre auf einem Untergrund möglich ist. Vorteilhafterweise ist erfindungsgemäß vorgesehen, dass der Rührmotor durch einen an dem Ausleger des Baggers angeordneten Tilt-Rotator gebildet ist.

Es ist auch möglich und erfindungsgemäß vorgesehen, dass das Baggersystem die erfindungsgemäße Transportkarre mit dem Betonkübelabschnitt sowie einem Rührwerk umfasst, wobei das Rührwerk den Rührabschnitt und den Rührwerkkupplungsabschnitt aufweist, wobei das Rührwerk mittels des Rührwerkkupplungsabschnitts an der Geräteaufnahme des Auslegers des Baggers festlegbar ist, wobei Rührabschnitt durch eine Bewegung des Auslegers in die Rührbewegung versetzbar ist und wobei der Rührabschnitt derart an den Betonkübelabschnitt angepasst ist, dass in dem Betonkübelabschnitt der Transportkarre mittels des Rührwerks ein Beton anrührbar ist.

Eine vorteilhafte Umsetzung des Erfindungsgedankens sieht vor, dass das Baggersystem eine wie voranstehend beschriebene Transportkarre mit einem Betonkübelabschnitt sowie einen Gemischlöffel aufweist, wobei der Gemischlöffel einen Löffelkupplungsabschnitt und einen Gemischaufnahmeabschnitt aufweist, wobei der Gemischaufnahmeabschnitt derart an den Betonkübelabschnitt der Transportkarre angepasst ist, dass bei einem Auslöffeln des Betonkübelabschnitts mit dem Gemischlöffel zwischen dem Gemischaufnahmeabschnitt und der Kübeloberfläche stets eine stetige Kontaktierungslinie ausbildbar ist, sodass eine restlose Entleerung des Betonkübelabschnitts mittels des Gemischlöffels ermöglicht ist. Derartige Kombinationen eines Gefäßes und eines Entnahmegerätes sind beispielsweise aus dem Bereich der Küchenmaschinen bekannt.

Erfindungsgemäß ist vorteilhafterweise vorgesehen, dass das Baggersystem eine erfindungsgemäße Transportkarre mit einer Verbrennungseinrichtung sowie einer Beschickungsgabel umfasst, wobei die Beschickungsgabel einen Zinkenabschnitt und einen Gabelkupplungsabschnitt aufweist, wobei die Beschickungsgabel mittels des Gabelkupplungsabschnitts an der Geräteaufnahme des Auslegers des Baggers festlegbar ist. Dieses Baggersystem kann vorteilhafterweise derart verwendet werden, dass mit Hilfe des Baggers zunächst die Transportkarre mit der Verbrennungseinrichtung auf einer Baustelle positioniert wird, anschließend die Transportkarre vorteilhafterweise mit Hilfe eines hydraulischen Schnellwechselsystems von dem Bagger abgekuppelt wird, nachfolgend die Beschickungsgabel mit dem Schnellwechselsystem aus einer vorteilhafterweise an der Verbrennungseinrichtung angeordneten Gabelhalterung entnommen und angekuppelt wird, anschließend der Deckel der Einfüllöffnung mit der Beschickungsgabel geöffnet wird, nachfolgend der Brennraum mit der Gabel durch die Einfüllöffnung beschickt und schließlich die Ofenklappe mit der Gabel geschlossen wird. Durch die Verwendung einer Gabel anstelle beispielsweise eines hydraulischen Greifers können die Kosten für die Herstellung des Baggersystem erheblich reduziert werden, da die Beschickungsgabel ohne hydraulische Komponenten auskommt.

Nachfolgend werden einige Ausführungsbeispiele des Erfindungsgedankens näher erläutert, die in der Zeichnung dargestellt sind.

Es zeigen:
Figur 1 eine schematische Darstellung einer Transportkarre mit einem Funktionsmodul,
Figur 2 eine schematische Darstellung einer Transportkarre mit zwei Funktionsmodulen mit unterschiedlichen Ladungsaufnahmemitteln,
Figur 3 eine schematische Darstellung einer Transportkarre mit einem Funktionsmodul mit Betonkübelabschnitt,
Figur 4 eine schematische Darstellung einer Transportkarre mit einem Funktionsmodul mit einer Mulde sowie einem Funktionsmodul mit einer Verbrennungseinrichtung,
Figur 5 eine schematische Darstellung einer Transportkarre mit einem Funktionsmodul mit einer Verbrennungseinrichtung,
Figur 6 eine schematische Darstellung eines Baggersystems aus einem Bagger und einer Transportkarre,
Figur 7 eine schematische Darstellung eines Baggersystems zum Anrühren von Beton und
Figur 8 eine schematische Darstellung eines Baggersystems zum Auslöffeln von Beton.

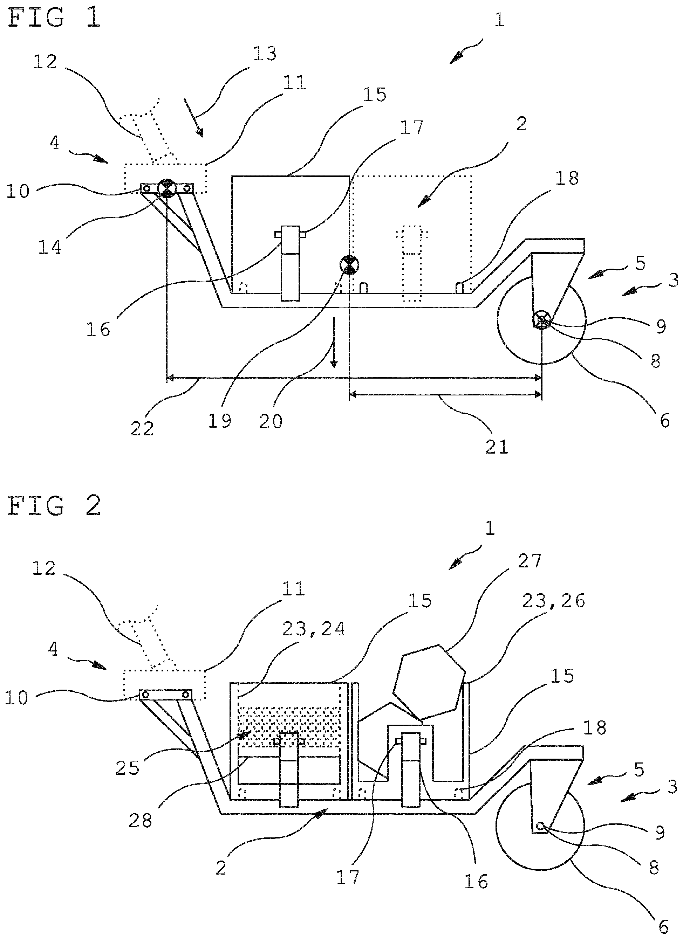

In Figur 1 ist eine schematische Darstellung einer erfindungsgemäßen Transportkarre 1 gezeigt. Die Transportkarre 1 weist einen Funktionsabschnitt 2, einen Fahrwerksabschnitt 3 und einen Kupplungsabschnitt 4 auf.

In dem Fahrwerksabschnitt 3 sind zwei Fahrwerkselemente 5 angeordnet auf denen die Transportkarre 1 aufsteht. Die Fahrwerkselemente 5 weisen jeweils ein Rad 6 auf, sodass durch das Fahrwerkselement 5 eine Bewegung der Transportkarre 1 auf einem Untergrund 7 erleichtert ist. Durch eine Nabe 8 des Rades 6 verläuft eine Kippachse 9 der Transportkarre 1.

In dem Kupplungsabschnitt 4 der dargestellten Transportkarre 1 ist ein Kupplungsmittel 10 angeordnet, mittels dessen die Transportkarre 1 an einer Geräteaufnahme 11 eines Auslegers 12 eines Baggers festlegbar ist. Mittels des Kupplungsmittels 10 ist eine Manipulationskraft 13 des Baggers in einem Kraftangriffspunkt 14 des Kupplungsmittels 10 in die Transportkarre 1 einleitbar. Das Kupplungsmittel 10 der dargestellten Transportkarre 1 ist mit einem Schnellwechselsystem für Baggeranbaugeräte verwendbar.

In dem Funktionsabschnitt 2 ist ein Funktionsmodul 15 an der Transportkarre 1 festgelegt. Der Funktionsabschnitt 2 der Transportkarre 1 weist ein erstes Verbindungsmittel 16 auf, das als ein Spannbügelverschluss ausgebildet ist. Das Funktionsmodul 15 weist ein zweites Verbindungsmittel 17 auf, dass als Gegenhaken zu dem als Spannbügelverschluss ausgebildeten ersten Verbindungsmittel 16 ausgebildet ist. In dem Funktionsabschnitt 2 ist ein als ein Führungsbolzen ausgestaltetes Führungsmittel 18 angeordnet, der in eine nicht bezeichnete Führungsbolzenaufnahme des Funktionsmoduls eingeführt ist. Durch das Führungsmittel 18 ist eine bestimmungsgemäße Ausrichtung des Funktionsmoduls 15 in Relation zu dem Funktionsabschnitt 2 der Transportkarre 1 unterstützt. Der Funktionsabschnitt 2 der dargestellten Transportkarre 1 ist derart ausgestaltet, dass auch ein zweites Funktionsmodul 15 in dem Funktionsabschnitt 2 anordenbar ist.

In einem Gesamtschwerpunkt 19 der Transportkarre 1 greift eine Gesamtgewichtskraft 20 der Transportkarre 1 an. Dabei ist ein Produkt aus einem Betrag der Gesamtgewichtskraft 20 und einem horizontalen Gesamtschwerpunktabstand 21 von der Kippachse 9 kleiner oder gleich einem Produkt aus einem Betrag der Manipulationskraft 13 und einem horizontalen Kraftangriffspunktabstand 22 von der Kippachse 9. Dadurch ist durch die Transportkarre 1 ein einseitiger Hebel gebildet, mittels dessen durch den Bagger eine Ladung manipulierbar ist, die eine Gewichtskraft ausübt, die größer ist, als die durch den Bagger maximal ausübbare Manipulationskraft 13.

Bei der in Figur 2 gezeigten erfindungsgemäßen Transportkarre 1 weisen die Funktionsmodule 15 Ladungsaufnahmemittel 23 auf. Eines der Ladungsaufnahmemittel 23 ist als eine Mulde 24 ausgebildet, durch die ein Schüttgut 25 aufgenommen ist. Bei dem anderen Funktionsmodul 15 sind die Ladungsaufnahmemittel 23 als Rungen 26 ausgebildet, wobei zwischen den Rungen 26 ein Stückgut 27 angeordnet ist. Die Mulde 24 weist auch einen als Sieb 28 ausgebildeten Abschnitt aus, durch den Bestandteile des Schüttguts 25 hindurchfallen, die eine definierte Ladungsmindestgröße unterschreiten.

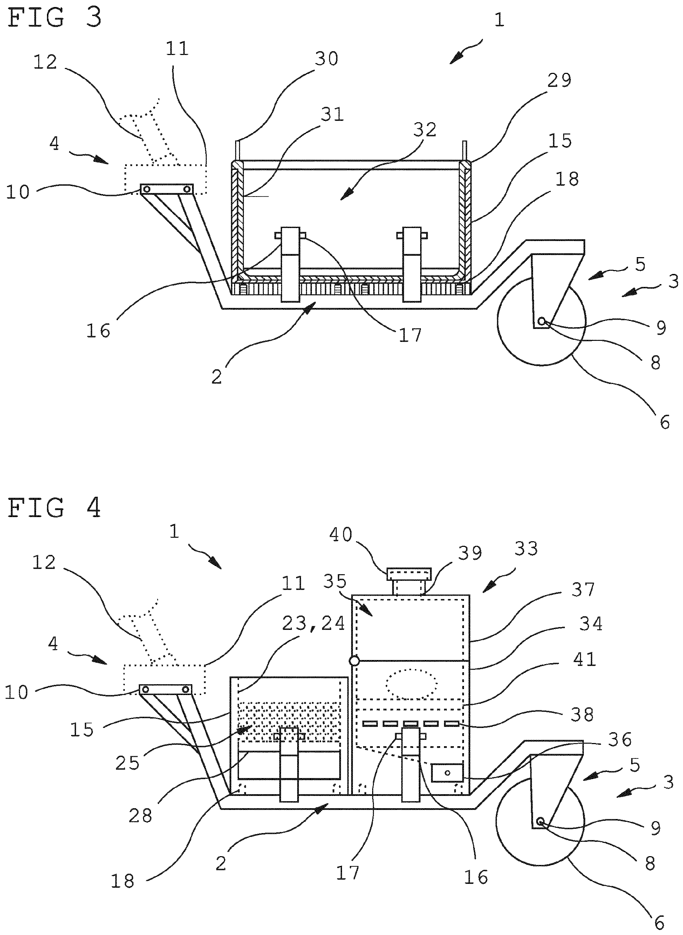

Die in Figur 3 gezeigte Ausführungsform einer erfindungsgemäßen Transportkarre 1 weist anders als die in Figur 2, und ähnlich wie die in Figur 1 gezeigte Ausführungsform lediglich ein in dem Funktionsabschnitt 2 angeordnetes Funktionsmodul 15 auf. Das Funktionsmodul 15 weist einen Betonkübelabschnitt 29 auf. Der Betonkübelabschnitt 29 ist als eine aus dem Funktionsmodul 15 entnehmbare Mörtelwanne ausgebildet. Der Betonkübelabschnitt 29 weist Kranösen 30 auf, mittels derer der Betonkübelabschnitt 29 durch einen Kran oder einen Bagger mittels eines Hebegeschirrs hebbar ist, sodass ein in dem Betonkübelabschnitt 29 angerührter Beton unabhängig von der Transportkarre 1 an einen Verarbeitungsort transportierbar ist.

Der Betonkübelabschnitt 21 ist aus einem hochdichten Polyethylen gefertigt, sodass eine Kübeloberfläche 31 besonders beständig gegenüber einem bei einem Anrühren von Beton auftretenden Erosionsverschleiß ist sowie eine hohe Beständigkeit gegenüber den im Beton enthaltenen Chemikalien aufweist. Darüber hinaus weist ein von dem Betonkübelabschnitt 29 umschlossener Mischraum 32 abgerundete Ecken und Kanten auf, sodass ein Risiko einer Ansammlung von unvermischtem Beton in Ecken und Kanten des Mischraums minimiert ist.

Die in Figur 4 gezeigte Ausführungsform einer erfindungsgemäßen Transportkarre 1 weist zwei Funktionsmodule 15 auf. Eines der Funktionsmodule 15 weist eine als eine Mulde 24 mit einem Sieb 28 ausgebildetes Ladungsaufnahmemittel 23 auf. Das andere Funktionsmodul 15 weist eine Verbrennungseinrichtung 33 zum Verbrennen von pflanzlichen Abfällen auf. Die Verbrennungseinrichtung 33 weist einen von einer Einhausung 34 umgebenen Brennraum 35 auf. Unterhalb des Brennraums 35 ist ein Aschekasten 36 angeordnet in dem bei dem Verbrennen der pflanzlichen Abfälle anfallende Asche gesammelt wird.

Die Einhausung 34 weist einen Deckel 37 auf, durch den der Brennraum 35 befüllt werden kann. Der Deckel 37 ist nach Art einer Haube ausgestaltet und gibt nach seinem Öffnen den kompletten Brennraum 35 frei, sodass auch großvolumige pflanzliche Abfälle in dem Brennraum 35 anordenbar sind.

Oberhalb des Aschekastens 36 weist die Verbrennungseinrichtung 33 Zuluftöffnungen 38 auf, durch die Frischluft in den Brennraum 35 einströmen kann. Der Deckel 37 der Verbrennungseinrichtung 33 weist eine Abluftöffnung 39 auf, durch die Abgase aus dem Brennraum 35 ausströmen können. An die Abluftöffnung 39 ist ein Schornstein 40 angeflanscht, der mittels einer Schornsteinabdeckung einen Austritt von Funken und Asche aus dem Brennraum 35 und einen Eintritt von Niederschlag, insbesondere Regen, in den Brennraum 35 minimiert. In dem Brennraum 35 ist auf einem Rost 41 beispielhaft ein zu verbrennendes Stück Abfall angeordnet.

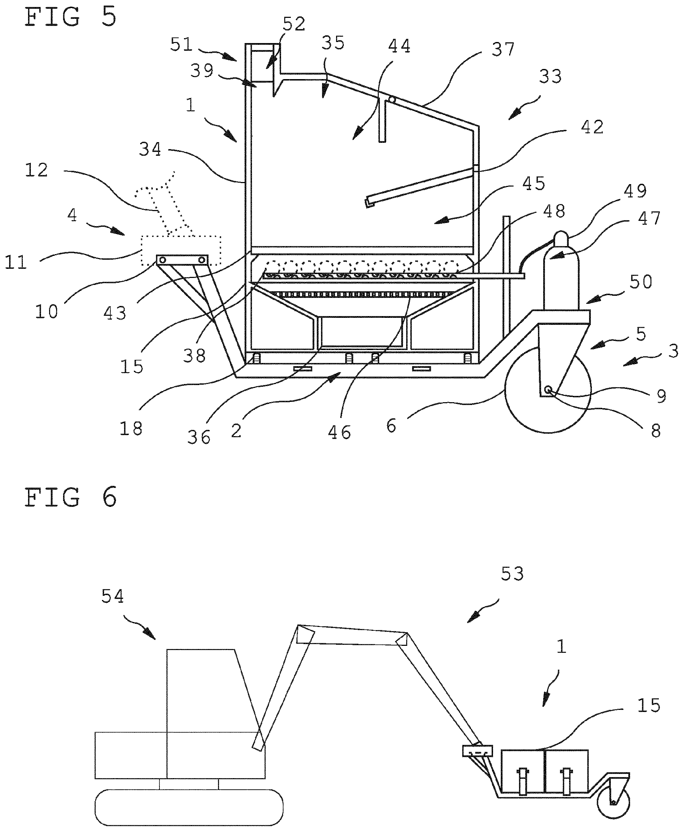

Die in Figur 5 gezeigte Ausführungsform einer erfindungsgemäßen Transportkarre 1 weist eine Verbrennungseinrichtung 33 auf, die gegenüber der in der Figur 4 gezeigten Verbrennungseinrichtung 33 modifiziert ist. Innerhalb des Brennraums 35 sind ein Einfüllrost 42 und ein Bodenrost 43 angeordnet. Oberhalb des Einfüllrostes 42 ist eine erste Abbrandzone 44 ausgebildet in der eingefüllte pflanzliche Abfälle zunächst getrocknet und teilweise verbrennt werden. Zwischen dem Einfüllrost 42 und dem Bodenrost 43 ist eine zweite Abbrandzone 45 ausgebildet. Bei einem Einfüllen von weiteren pflanzlichen Abfällen werden die zuerst eingefüllten Abfälle in die zweite Abbrandzone 45 verlagert, wo das endgültige Verbrennen erfolgt. Zwischen dem Aschekasten 36 und dem Brennraum 35 ist bei der dargestellten Ausführungsform der erfindungsgemäßen Transportkarre 1 mit Verbrennungseinrichtung 33 ein Siebelement 46 angeordnet. Das Siebelement 46 weist magnetische Eigenschaften auf, sodass mittels des Siebelements 46 auch ferromagnetische Bestandteile, beispielsweise Schrauben und/ oder Nägel, aus der Asche gesiebt werden können. Zwischen dem Siebelement 46 und dem Bodenrost 43 sind kreisförmige Zuluftöffnungen 38 angeordnet.

Die Verbrennungseinrichtung 33 weist eine gasbetriebene Fremdfeuerung 47 auf. Ein Brenner 48 der Fremdfeuerung ist zwischen den Zuluftöffnungen 38 und dem Bodenrost 43 angeordnet. Eine Gasflasche 49 zur Versorgung des Brenners 48 mit einem Brenngas ist in einer thermisch geschirmten Gasflaschenaufnahme 50 der Verbrennungseinrichtung 33 angeordnet.

Um eine Qualität der Abgase der Verbrennungseinrichtung 33 zu verbessern, weist die Verbrennungseinrichtung 33 ein an die Abluftöffnung 39 angeflanschtes Auspuffelement 51 auf, wobei in dem Auspuffelement 51 ein Filterelement 52 angeordnet ist. Anders als bei der in Figur 4 gezeigten Ausführungsform ist die Abluftöffnung 39 nicht auf dem Deckel 37, sondern auf der Einhausung 34 der Verbrennungseinrichtung 33 angeordnet.

In Figur 6 ist eine schematische Darstellung eines Baggersystems 53 aus einer Transportkarre 1 und einem Bagger 54 gezeigt. Die Transportkarre 1 weist zwei Funktionsmodule 15 auf

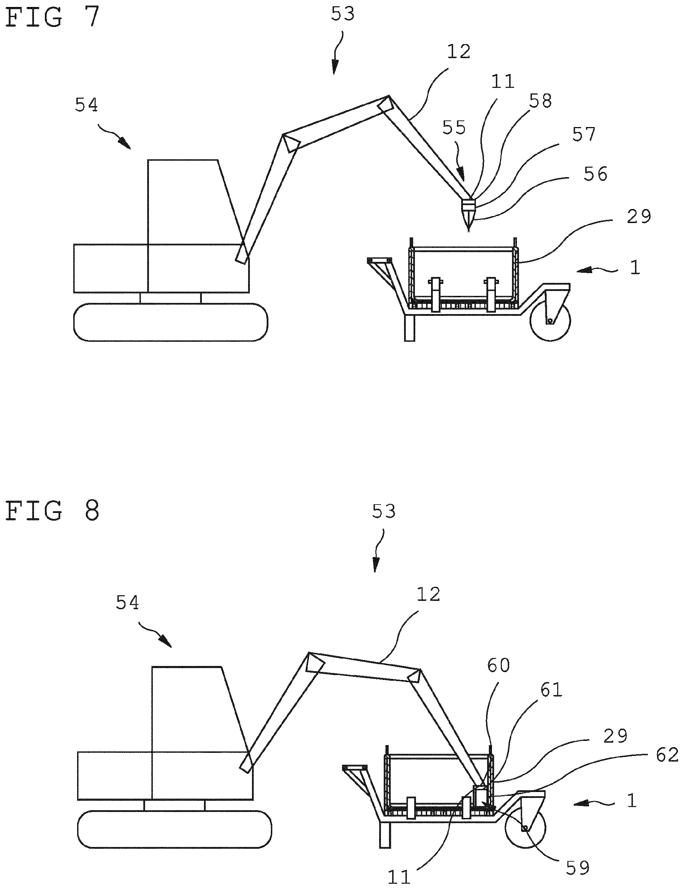

In Figur 7 ist ein Baggersystem 53 aus dem Bagger 54 und einer Transportkarre 1 gezeigt, wobei die Transportkarre 1 ein Funktionsmodul 2 umfassend einen Betonkübelabschnitt 29 aufweist. Das Baggersystem 53 umfasst auch ein Rührwerk 55, wobei das Rührwerk 55 einen quirlförmigen Rührabschnitt 56, einen Antriebsabschnitt 57 und einen Rührwerkkupplungsabschnitt 58 aufweist. Das Rührwerk 55 weist in dem Rührwerkkupplungsabschnitt 58 Kupplungsmittel auf und ist an der Geräteaufnahme 11 des Auslegers 12 des Baggers 54 festgelegt. Der Antriebsabschnitt 57 weist einen hydraulischen Rührmotor auf, der mit dem Rührabschnitt 56 in Wirkverbindung gebracht ist. Der hydraulische Rührmotor ist mit einer Baggerhydraulik in Wirkverbindung gebracht und durch diese antreibbar. Der Rührabschnitt 56 und der Betonkübelabschnitt 29 sind derart aneinander angepasst, dass in dem Betonkübelabschnitt 29 der Transportkarre 1 mittels des Rührwerks 55 ein Beton anrührbar ist.

In Figur 8 ist ein Baggersystem 54 gezeigt, das anstelle des in Figur 7 gezeigten Rührwerks 55 einen Gemischlöffel 59 aufweist. Der Gemischlöffel 59 ist mittels eines Löffelkupplungsabschnitt 60 des Gemischlöffels 59 an der Geräteaufnahme 11 des Baggers 54 festgelegt. Der Gemischlöffel 59 ist in den Betonkübelabschnitt 29 eingeführt. Dabei ist ein Gemischaufnahmeabschnitt 61 des Gemischlöffels mit der Kübeloberfläche 31 derart in Anlage gebracht, dass zwischen dem Gemischaufnahmeabschnitt 61 und der Kübeloberfläche 31 eine stetige Kontaktierungslinie 62 ausgebildet ist. Mit dem dargestellten Gemischlöffel 59 ist eine restlose Entleerung des Betonkübelabschnitts 29 ermöglicht.

### BEZUGSZEICHENLISTE

- 1.: Transportkarre
- 2.: Funktionsabschnitt
- 3.: Fahrwerksabschnitt
- 4.: Kupplungsabschnitt
- 5.: Fahrwerkselement
- 6.: Rad
- 7.: Untergrund
- 8.: Nabe
- 9.: Kippachse
- 10.: Kupplungsmittel
- 11.: Geräteaufnahme
- 12.: Ausleger
- 13.: Manipulationskraft
- 14.: Kraftangriffspunkt
- 15.: Funktionsmodul
- 16.: erstes Verbindungsmittel
- 17.: zweites Verbindungsmittel
- 18.: Führungsmittel
- 19.: Gesamtschwerpunkt
- 20.: Gesamtgewichtskraft
- 21.: Gesamtschwerpunktabstand
- 22.: Kraftangriffspunktabstand
- 23.: Ladungsaufnahmemittel
- 24.: Mulde
- 25.: Schüttgut
- 26.: Runge
- 27.: Stückgut
- 28.: Sieb
- 29.: Betonkübelabschnitt
- 30.: Kranöse
- 31.: Kübeloberfläche
- 32.: Mischraum
- 33.: Verbrennungseinrichtung
- 34.: Einhausung
- 35.: Brennraum
- 36.: Aschekasten
- 37.: Deckel
- 38.: Zuluftöffnung
- 39.: Abluftöffnung
- 40.: Schornstein
- 41.: Rost
- 42.: Einfüllrost
- 43.: Bodenrost
- 44.: erste Abbrandzone
- 45.: zweite Abbrandzone
- 46.: Siebelement
- 47.: Fremdfeuerung
- 48.: Brenner
- 49.: Gasflasche
- 50.: Gasflaschenaufnahme
- 51.: Auspuffelement
- 52.: Filterelement
- 53.: Baggersystem
- 54.: Bagger
- 55.: Rührwerk
- 56.: Rührabschnitt
- 57.: Antriebsabschnitt
- 58.: Rührwerkkupplungsabschnitt
- 59.: Gemischlöffel
- 60.: Löffelkupplungsabschnitt
- 61.: Gemischaufnahmeabschnitt
- 62.: Kontaktierungslinie

## Patentansprüche

1. Transportkarre (1) mit zumindest einem Funktionsmodul (15) zur Verwendung mit einem Bagger , wobei die Transportkarre (1) einen Funktionsabschnitt (2), einen Fahrwerksabschnitt (3) und einen Kupplungsabschnitt (4) aufweist, wobei in dem Funktionsabschnitt (2) das Funktionsmodul (15) an der Transportkarre (1) festgelegt ist, wobei in dem Funktionsabschnitt (3) zumindest ein Fahrwerkselement (5) angeordnet ist, wobei die Transportkarre (1) bei bestimmungsgemäßer Verwendung auf dem zumindest einen Fahrwerkselement (5) aufsteht und durch das Fahrwerkselement (5) eine Bewegung der Transportkarre (1) auf einem Untergrund (7) erleichtert ist, wobei eine Kippachse (9) der Transportkarre (1) durch das Fahrwerkselement (5) verläuft, wobei in dem Kupplungsabschnitt (4) zumindest ein Kupplungsmittel (10) angeordnet ist, wobei mittels des Kupplungsmittels (10) die Transportkarre (1 )an einer Geräteaufnahme (11) eines Auslegers (12) des Baggers festlegbar und eine Manipulationskraft (13) des Baggers in einem Kraftangriffspunkt (14) des Kupplungsmittels (10) in die Transportkarre (1) einleitbar ist, **dadurch gekennzeichnet dass** in dem Funktionsabschnitt (2) zumindest zwei Funktionsmodule (15) anordenbar sind.

2. Transportkarre (1) nach Anspruch 1, **dadurch gekennzeichnet, dass** das Funktionsmodul (15) als ein Ladungsaufnahmeelement ausgebildet ist, wobei das Ladungsaufnahmeelement zumindest ein Ladungsaufnahmemittel (23) aufweist, wobei in dem Ladungsaufnahmemittel (23) eine Ladung anordenbar ist und/ oder durch das Ladungsaufnahmemittel (23) eine Ladung aufgenommen werden kann.

3. Transportkarre (1) nach Anspruch 2, **dadurch gekennzeichnet, dass** das Ladungsaufnahmemittel (23) zumindest abschnittsweise als eine Mulde (24) ausgestaltet ist, wobei ein Muldeninnenraum derart von einer Muldenwand umschlossen ist, dass eine als ein Schüttgut (25) und/ oder eine Flüssigkeit ausgebildete Ladung durch die Mulde (24) aufnehmbar ist.

4. Transportkarre (1) nach einem der Ansprüche 2 oder 3, **dadurch gekennzeichnet, dass** zumindest ein Ladungsaufnahmemittel (23) eine Runge (26) ist, wobei durch das als Runge (26) ausgebildete Ladungsaufnahmemittel (23) eine Gefahr eines Herausfallens eines als Stückgut (27) ausgebildete Ladungsstückes aus dem Ladungsaufnahmeelement verringert ist.

5. Transportkarre (1) nach einem der Ansprüche 1 bis 4, **dadurch gekennzeichnet, dass** das Funktionsmodul (15) zumindest abschnittsweise als ein Sieb (28) ausgebildet ist, sodass nur Ladung einer gewissen Ladungsmindestgröße im Ladeaufnahmeelement verbleibt.

6. Transportkarre (1) nach einem der Ansprüche 1 bis 5, **dadurch gekennzeichnet, dass** das Funktionsmodul (15) einen Betonkübelabschnitt (29) aufweist, wobei eine Kübeloberfläche (31) des Betonkübelabschnitts (29) derart ausgestaltet ist, dass eine Verarbeitung von Beton in dem Betonkübelabschnitt (29) begünstigt ist.

7. Transportkarre (1) nach Anspruch 6, **dadurch gekennzeichnet, dass** der Betonkübelabschnitt (29) aus dem Funktionsmodul (15) entnehmbar ist, sodass ein angerührter Beton unabhängig von der Transportkarre (1) an einen Verarbeitungsort verbringbar ist.

8. Transportkarre (1) nach einem der Ansprüche 1 bis 7, **dadurch gekennzeichnet, dass** das Funktionsmodul (15) einen Verbrennungseinrichtung (33) aufweist, wobei die Verbrennungseinrichtung (33) zumindest einen Brennraum (35) und einen Aschekasten (36) aufweist, wobei in dem Brennraum (35) der Verbrennungseinrichtung (33) pflanzliche Abfälle verbrennbar sind und wobei eine bei einem Verbrennen der pflanzlichen Abfälle anfallende Asche in dem Aschekasten (36) gesammelt wird.

9. Transportkarre (1) nach Anspruch 8, **dadurch gekennzeichnet, dass** die Verbrennungseinrichtung (33) eine verschließbare Einfüllöffnung, zumindest eine Zuluftöffnung (38) und zumindest eine Abluftöffnung (39) aufweist, wobei durch die Einfüllöffnung ein Brennmaterial in den Brennraum (35) einfüllbar ist, wobei durch die Zuluftöffnung (38) Frischluft in den Brennraum (35) einleitbar ist und wobei durch die Abluftöffnung (39) Abgase aus dem Brennraum (35) ausleitbar sind.

10. Transportkarre (1) nach Anspruch 9, **dadurch gekennzeichnet, dass** die Einfüllöffnung mittels eines oberhalb des Brennraums (35) angeordneten Deckels (37) verschlossen ist, wobei die Abluftöffnung (39) auf dem Deckel (37) angeordnet ist.

11. Transportkarre (1) nach einem der Ansprüche 9 oder 10, **dadurch gekennzeichnet, dass** an der Abluftöffnung (39) ein Auspuffelement (51) angeordnet ist.

12. Transportkarre (1) nach einem der Ansprüche 8 bis 11, **dadurch gekennzeichnet, dass** der Aschekasten (36) zumindest ein Siebelement (46) aufweist, wobei mittels des Siebelements (46) bei der Verbrennung der pflanzlichen Abfällen anfallende feste Verbrennungsrückstände nach einer Partikelgröße fraktionierbar sind.

13. Transportkarre (1) nach einem der Ansprüche 8 bis 12, **dadurch gekennzeichnet, dass** die Verbrennungseinrichtung (33) zumindest eine erste Abbrandzone (44) und eine zweite Abbrandzone (45) aufweist, wobei in der ersten Abbrandzone (44) eine erste Verbrennungstemperatur herrscht, wobei in der zweiten Abbrandzone (45) eine zweite Verbrennungstemperatur herrscht und wobei die pflanzlichen Abfälle bei einem Verbrennen von der ersten Abbrandzone (44) in die zweite Abbrandzone (45) überführt werden, sodass mittels der Verbrennungseinrichtung (33) eine Verbrennung von pflanzlichen Abfällen mit einer Restfeuchte von mehr als 25%, bevorzugt von mehr als 50% und besonders bevorzugt von mehr als 75% ermöglicht ist.

14. Transportkarre (1) nach einem der Ansprüche 8 bis 13, **dadurch gekennzeichnet, dass** die Verbrennungseinrichtung (33) eine Fremdfeuerung (47) aufweist, wobei die Fremdfeuerung (47) mittels eines Brennstoff befeuerbar ist und wobei durch die Fremdfeuerung (47) die Verbrennung der pflanzlichen Abfälle eingeleitet und/ oder unterstützt und/ oder durchgeführt werden kann.

15. Baggersystem (53) umfassend zumindest eine Transportkarre (1) nach einem der Ansprüche 1 bis 14 und einen Bagger.

## Claims

1. Transport trolley (1) having at least one functional module (15) for use with an excavator, wherein the transport trolley (1) has a functional section (2), a chassis section (3), and a coupling section (4), wherein the functional module (15) is secured to the transport trolley (1) in the functional section (2), wherein at least one chassis element (5) is arranged in the functional section (3), wherein the transport trolley (1) is supported on the at least one chassis element (5) when used as intended, and the chassis element (5) facilitates the movement of the transport trolley (1) on an underlying surface (7), wherein a tilt axis (9) of the transport trolley (1) runs through the chassis element (5), wherein at least one coupling means (10) is arranged in the coupling section (4), wherein by means of the coupling means (10) the transport trolley (1) can be secured to a device receiving area (11) of a boom (12) of the excavator and a manipulation force (13) of the excavator can be introduced into the transport trolley (1) in a force application point (14) of the coupling means (10), **characterised in that** at least two functional modules (15) can be arranged in the functional section (2).

2. Transport trolley (1) according to claim 1, **characterised in that** the functional module (15) is designed as a load-receiving element, wherein the load-receiving element has at least one load-receiving means (23), wherein a load can be arranged in the load-receiving means (23) and/or a load can be received by the load-receiving means (23).

3. Transport trolley (1) according to claim 2, **characterised in that** the load-receiving means (23) is designed at least in sections as a trough (24), wherein an interior of the trough is enclosed by a trough wall in such a way that a load designed as a bulk material (25) and/or a liquid can be received by the trough (24).

4. Transport trolley (1) according to either one of claims 2 or 3, **characterised in that** at least one load-receiving means (23) is a stanchion (26), wherein the load-receiving means (23) in the form of a stanchion (26) reduces the risk of an item of load in the form of a unit load (27) falling out of the load-receiving element.

5. Transport trolley (1) according to any one of claims 1 to 4, **characterised in that** the functional module (15) is designed at least in sections as a sieve (28), so that only loads of a certain minimum load size remain in the load-receiving element.

6. Transport trolley (1) according to any one of claims 1 to 5, **characterised in that** the functional module (15) has a concrete bucket section (29), wherein a bucket surface (31) of the concrete bucket section (29) is designed such that the processing of concrete in the concrete bucket section (29) is promoted.

7. Transport trolley (1) according to claim 6, **characterised in that** the concrete bucket section (29) can be removed from the functional module (15) such that a mixed concrete can be transported to a processing location independently of the transport trolley (1).

8. Transport trolley (1) according to any one of claims 1 to 7, **characterised in that** the functional module (15) has a combustion device (33), wherein the combustion device (33) has at least one combustion chamber (35) and one ash pan (36), wherein plant waste can be burnt in the combustion chamber (35) of the combustion device (33) and wherein an ash resulting from a burning of the plant waste is collected in the ash pan (36).

9. Transport trolley (1) according to claim 8, **characterised in that** the combustion device (33) has a closable filling opening, at least one supply air opening (38) and at least one exhaust air opening (39), wherein a combustible material can be filled into the combustion chamber (35) through the filling opening, wherein fresh air can be introduced into the combustion chamber (35) through the supply air opening (38) and wherein exhaust gases can be discharged from the combustion chamber (35) through the exhaust air opening (39).

10. Transport trolley (1) according to claim 9, **characterised in that** the filling opening is closed by means of a cover (37) arranged above the combustion chamber (35), wherein the exhaust air opening (39) is arranged on the cover (37).

11. Transport trolley (1) according to either one of claims 9 or 10, **characterised in that** an exhaust element (51) is arranged on the exhaust air opening (39).

12. Transport trolley (1) according to any one of claims 8 to 11, **characterised in that** the ash pan (36) has at least one sieve element (46), wherein solid combustion residues resulting from the combustion of the plant waste can be fractionated according to a particle size by means of the sieve element (46).

13. Transport trolley (1) according to any one of claims 8 to 12, **characterised in that** the combustion device (33) has at least a first burn-off zone (44) and a second burn-off zone (45), wherein a first combustion temperature prevails in the first burn-off zone (44), wherein a second combustion temperature prevails in the second burn-off zone (45) and wherein the plant waste is transferred from the first burn-off zone (44) to the second burn-off zone (45) during combustion, so that combustion of plant waste with a residual moisture content of more than 25%, preferably more than 50% and particularly preferably more than 75% is made possible by means of the combustion device (33).

14. Transport trolley (1) according to any one of claims 8 to 13, **characterised in that** the combustion device (33) has an external firing system (47), wherein the external firing system (47) can be fired by means of a fuel and wherein the combustion of the plant waste can be initiated and/or supported and/or carried out by the external firing system (47).

15. Excavator system (53) comprising at least one transport trolley (1) according to any one of claims 1 to 14 and an excavator.

## Revendications

1. Chariot de transport (1) avec au moins un module fonctionnel (15) pour l'utilisation avec une excavatrice, le chariot de transport (1) présentant une section fonctionnelle (2), une section de châssis (3) et une section d'accouplement (4), le module fonctionnel (15) étant fixé au chariot de transport (1) dans la section fonctionnelle (2), au moins un élément de châssis (5) étant agencé dans la section fonctionnelle (3), le chariot de transport (1) reposant sur l'au moins un élément de châssis (5) lors de l'utilisation conforme et un déplacement du chariot de transport (1) sur un support (7) étant facilité par l'élément de châssis (5), un axe de basculement (9) du chariot de transport (1) s'étendant à travers l'élément de châssis (5), au moins un moyen d'accouplement (10) étant agencé dans la section d'accouplement (4), le chariot de transport (1) pouvant être fixé au moyen du moyen d'accouplement (10) à un logement d'appareil (11) d'un bras (12) de l'excavatrice et une force de manipulation (13) de l'excavatrice pouvant être introduite dans le chariot de transport (1) dans un point d'application de force (14) du moyen d'accouplement (10), **caractérisé en ce qu'**au moins deux modules fonctionnels (15) peuvent être agencés dans la section fonctionnelle (2).

2. Chariot de transport (1) selon la revendication 1, **caractérisé en ce que** le module fonctionnel (15) est réalisé sous la forme d'un élément de réception de charge, l'élément de réception de charge présentant au moins un moyen de réception de charge (23), une charge pouvant être agencée dans le moyen de réception de charge (23) et/ou une charge pouvant être reçue par le moyen de réception de charge (23).

3. Chariot de transport (1) selon la revendication 2, **caractérisé en ce que** le moyen de réception de charge (23) est conçu au moins par sections sous la forme d'une auge (24), un espace intérieur d'auge étant entouré par une paroi d'auge de telle sorte qu'une charge réalisée sous la forme d'un produit en vrac (25) et/ou d'un liquide peut être reçue par l'auge (24).

4. Chariot de transport (1) selon l'une quelconque des revendications 2 ou 3, **caractérisé en ce qu'**au moins un moyen de réception de charge (23) est une ridelle (26), le moyen de réception de charge (23) réalisé sous forme de ridelle (26) permettant de réduire un risque de chute d'une pièce de charge réalisée sous forme de produit en vrac (27) hors de l'élément de réception de charge.

5. Chariot de transport (1) selon l'une quelconque des revendications 1 à 4, **caractérisé en ce que** le module fonctionnel (15) est réalisé au moins par sections sous la forme d'un tamis (28), de telle sorte que seule une charge d'une certaine taille minimale de charge reste dans l'élément de réception de charge.

6. Chariot de transport (1) selon l'une quelconque des revendications 1 à 5, **caractérisé en ce que** le module fonctionnel (15) présente une section de benne à béton (29), une surface de benne (31) de la section de benne à béton (29) étant conçue de manière à favoriser un traitement de béton dans la section de benne à béton (29).

7. Chariot de transport (1) selon la revendication 6, **caractérisé en ce que** la section de benne à béton (29) peut être retirée du module fonctionnel (15), de telle sorte qu'un béton gâché peut être déplacé vers un lieu de traitement indépendamment du chariot de transport (1).

8. Chariot de transport (1) selon l'une quelconque des revendications 1 à 7, **caractérisé en ce que** le module fonctionnel (15) présente un dispositif de combustion (33), le dispositif de combustion (33) présentant au moins une chambre de combustion (35) et un bac à cendres (36), des déchets végétaux pouvant être brûlés dans la chambre de combustion (35) du dispositif de combustion (33) et des cendres produites lors d'une combustion des déchets végétaux étant collectées dans le bac à cendres (36).

9. Chariot de transport (1) selon la revendication 8, **caractérisé en ce que** le dispositif de combustion (33) présente une ouverture de remplissage pouvant être fermée, au moins une ouverture d'arrivée d'air (38) et au moins une ouverture d'évacuation d'air (39), un matériau combustible pouvant être introduit dans la chambre de combustion (35) par l'ouverture de remplissage, de l'air frais pouvant être introduit dans la chambre de combustion (35) par l'ouverture d'arrivée d'air (38) et des gaz d'échappement pouvant être évacués de la chambre de combustion (35) par l'ouverture d'évacuation d'air (39).

10. Chariot de transport (1) selon la revendication 9, **caractérisé en ce que** l'ouverture de remplissage est fermée au moyen d'un couvercle (37) agencé au-dessus de la chambre de combustion (35), l'ouverture d'évacuation d'air (39) étant agencée sur le couvercle (37).

11. Chariot de transport (1) selon l'une quelconque des revendications 9 ou 10, **caractérisé en ce qu'**un élément d'échappement (51) est agencé sur l'ouverture d'évacuation d'air (39).

12. Chariot de transport (1) selon l'une quelconque des revendications 8 à 11, **caractérisé en ce que** le bac à cendres (36) présente au moins un élément de tamisage (46), les résidus de combustion solides produits lors de la combustion des déchets végétaux pouvant être fractionnés selon une taille de particules au moyen de l'élément de tamisage (46).

13. Chariot de transport (1) selon l'une quelconque des revendications 8 à 12, **caractérisé en ce que** le dispositif de combustion (33) présente au moins une première zone de combustion (44) et une deuxième zone de combustion (45), une première température de combustion régnant dans la première zone de combustion (44), une deuxième température de combustion régnant dans la deuxième zone de combustion (45) et les déchets végétaux étant transférés lors d'une combustion de la première zone de combustion (44) dans la deuxième zone de combustion (45), de telle sorte qu'une combustion de déchets végétaux avec une humidité résiduelle de plus de 25 %, de préférence de plus de 50 % et de manière particulièrement préférée de plus de 75 % est possible au moyen du dispositif de combustion (33).

14. Chariot de transport (1) selon l'une quelconque des revendications 8 à 13, **caractérisé en ce que** le dispositif de combustion (33) présente une combustion externe (47), la combustion externe (47) pouvant être alimentée au moyen d'un combustible et la combustion des déchets végétaux pouvant être initiée et/ou soutenue et/ou effectuée par la combustion externe (47).

15. Système d'excavation (53) comprenant au moins un chariot de transport (1) selon l'une quelconque des revendications 1 à 14 et une excavatrice.
